# EUROPÄISCHE PATENTANMELDUNG

(11) **EP 0 808 573 A2**
(43) Veröffentlichungstag der Anmeldung: **26.11.1997**
(21) Anmeldenummer: 97108215.1
(22) Anmeldetag: 21.05.1997
(51) Int. Cl.: A21D 8/00, A21D 13/02

(54) **Verfahren zur Herstellung eines lagerfähigen, treibmittelfreien Brotes und nach diesem Verfahren erhältliches Brot**

(30) Priorität: 22.05.1996 DE 19620632
(71) Anmelder: Capello, Giorgio, 81739 München (DE)
(72) Erfinder: Capello, Giorgio, 81739 München (DE)
(74) Vertreter: Kindler, Matthias, Dr. Dipl.-Chem.

(57) **Zusammenfassung**

Verfahren zur Herstellung eines lagerfähigen, treibmittelfreien Brotes, das die folgenden Schritte umfaßt:
a) Vermischen von 100 Gew.-% gemahlenem Getreide mit 45 bis 60 Gew.-% Wasser,
b) Auswalzen des erhaltenen Teiges auf eine Dicke von 0,6 bis 1,2 mm, und
c) Backen für 25 bis 3 Minuten bei einer Temperatur von 130 bis 250°C, bis das zur Teigbildung verwendete Wasser im wesentlichen vollständig entfernt ist.

## Beschreibung

Die Erfindung betrifft ein Verfahren zur Herstellung eines lagerfähigen und treibmittelfreien Brotes sowie ein nach diesem Verfahren erhältliches Brot.

Üblicherweise wird Brot hergestellt, indem ein Teig, der Getreidemehl, Wasser, Salz, Treibmittel und ggf. weitere Gewürze und/oder Zusatzstoffe umfaßt, zu einer wählbaren Form geformt und anschließend gebacken wird. Durch das in dem Teig enthaltene Treibmittel werden im Laufe des Backvorganges gasförmige Stoffe freigesetzt, die dafür verantwortlich sind, daß der Teiglaib beim Backen aufgeht, und ein mehr oder weniger lockerer Teigverbund im ausgebackenen Brot erzeugt wird. Das ausgebackene Brot hat ein größeres Volumen als der ungebackene Teig und enthält noch größere Mengen Feuchtigkeit, wodurch dem Brot Weichheit und Elastizität verliehen wird. Diese Eigenschaften sind für zahlreiche Verwendungen von Brot bei der täglichen Ernährung wünschenswert. Durch den Wassergehalt ist jedoch die Haltbarkeit des Brotes stark begrenzt und mit fortschreitendem Wasserverlust im Laufe der Zeit wird es hart, rissig und somit schwer eßbar.

Ein Beispiel für ein gut lagerfähiges Brot ist Knäckebrot, das aus einem Teig ohne gasfreisetzende Zusatzstoffe hergestellt wird. Anstelle dieser Zusatzstoffe wird dem Teig ein Gas untergerührt, bzw. während des Backens einer Gasbeaufschlagung unterzogen. Knäckebrot ist wasserarm, und der ausgebackene Teig ist daher relativ hart. Diese Härte wird jedoch durch die eingeschlossenen Gasblasen gedämpft. Aufgrund der aufwendigen Herstellung von Knäckebrot besitzt dieses den Nachteil, daß es nur unter hohem Kostenaufwand erhältlich ist.

Weiterhin sind aus verschiedenen Kulturkreisen der Welt brotartige Fladen bekannt, die auf Grundlage verschiedenster Getreidesorten in Form von weichen, reißfähigen Fladen hergestellt werden. Derartige Fladenbrote besitzen aufgrund ihres Wassergehaltes ebenfalls nur eine begrenzte Lagerstabilität.

Daher lag der Erfindung die Aufgabe zugrunde, ein Verfahren zur Herstellung eines lagerfähigen, treibmittelfreien Brotes bereitzustellen, das kostengünstig ist, sowie ein nach diesem Verfahren erhältliches Brot, das die oben genannten Nachteile nicht aufweist und vorteilhafte Ess- und Kaueigenschaften besitzt.

Diese Aufgabe konnte erfindungsgemäß gelöst werden durch ein Verfahren zur Herstellung eines lagerfähigen, treibmittelfreien Brotes, das die folgenden Schritte umfaßt:
a) Vermischen von 100 Gew.% gemahlenem Getreide mit 45 bis 60 Gew.% Wasser,
b) Auswalzen des erhaltenen Teiges auf eine Dicke von 0,6 bis 1,2 mm, und
c) Backen für 25 bis 3 Minuten bei einer Temperatur von 130 bis 250°C, bis das zur Teigbildung verwendete Wasser im wesentlichen vollständig entfernt ist.

Durch diese überraschende Lösung konnte ein neuer Beitrag im Bereich der Backwaren geleistet werden, der den Stand der Technik durch die folgenden Vorteile erheblich erweitert:
- Bereitstellung des Brotes durch einen einfachen Herstellungsprozeß
- Geringe Produktionskosten
- Hohe Haltbarkeit des erhaltenen Brotes in Verbindung mit einem angenehmen Eßgefühl

Als Basismaterial in dem erfindungsgemäßen Verfahren wird gemahlenes Getreide verwendet. Als Getreide kommt ein beliebiges Getreide oder Mischungen aus mehreren Getreidesorten in Betracht. Beispiele für verwendbare Getreidesorten sind Weizen, Gerste, Roggen, Dinkel, Mais, Grünkern und Kamut. Das Getreide kann entweder sortenrein oder in einer Mischung von zwei oder mehreren davon verwendet werden.

Erfindungsgemäß ist es bevorzugt, aus Vollkorngetreide hergestelltes Mehl zu verwenden, da das Brot dadurch einen herzhaften Getreidegeschmack erhält und durch die im Vollkorn enthaltenen Ballaststoffe leicht bekömmlich und verdauungsfördernd wird, und darüber hinaus durch die darin enthaltenen Mineralstoffe zur gesundheitsbewußten Ernährung geeignet ist. Bevorzugt sind Mehlmischungen, die Weizen, Dinkel und Roggen umfassen, worin weiter bevorzugt eine oder mehrere dieser Mehlsorten aus Vollkorngetreide hergestellt sind. In einer weiter bevorzugten Ausführungsform umfaßt das verwendete Mehl weiterhin Kamut, und besonders bevorzugt ist eine Vollkornmehlmischung aus Weizen, Dinkel, Roggen und Kamut.

Nach dem erfindungsgemäßen Verfahren werden 100 Gew.% des gemahlenen Getreides mit 45 bis 60 Gew.% Wasser zu einem Teig vermischt. Vorzugsweise wird eine Wassermenge von 50 bis 55 Gew.% verwendet, jedoch kann die geeigneterweise zu verwendende Menge in Abhängigkeit von der Beschaffenheit und Zusammensetzung des Getreidemehls variieren.

Das Mehl, das Wasser und weitere wahlweise Zusatzstoffe, wie weiter unten definiert, werden innig miteinander vermischt, beispielsweise durch Kneten mit der Hand oder durch maschinelles Kneten mit einer beliebigen im Stand der Technik bekannten Teigknetmaschine.

Der erhaltene Teig wird nach einem beliebigen Verfahren auf eine Dicke von 0,6 bis 1,2 mm ausgewalzt und in eine beliebige Form gebracht, und anschließend für 25 bis 3 Minuten bei einer Temperatur von 130 bis 250 °C gebacken.

Das Auswalzen und die Formgebung kann in einer Ausführung so erfolgen, daß der Teig zunächst auf eine Dicke ausgewalzt wird, die deutlich größer als die Enddicke des Teiges ist, und vorzugsweise im Bereich von 2,5 bis 5 mm liegt, dann, falls gewünscht, einzelne Teile in beliebiger Form aus diesem Teig geschnitten oder ausgestochen werden, und diese Einzelteile dann auf die Enddicke von 0,6 bis 1,2 mm ausgewalzt werden. In einer anderen Ausführung kann der Teig direkt auf die obige Enddicke ausgewalzt werden, bevor eine Formgebung der zu backenden Stücke erfolgt.

Bevorzugte Formen für die ausgewalzten Teigstücke sind runde, ovale, drei-, vier- oder sechseckige Strukturen. Derartig geformte Endprodukte lassen sich raumsparend verpacken und sprechen das ästhetische Empfinden des Verbrauchers an und lassen sich daher in optisch ansprechender Form anbieten. Darüber hinaus haben drei-, vier- und sechseckige Formen den Vorteil, daß sie aus einer größeren Teigfläche ohne Verschnitt erhältlich sind.

Die Größe der einzelnen Teigstücke ist nicht sonderlich eingeschränkt. Aus Handhabungs- und Portionierungsgründen sind jedoch einzelne Stücke mit einer Fläche von ca. 50 bis 200 cm², insbesondere 75 bis 200 cm², bevorzugt. Das entspricht beispielsweise kreisförmigen Teigflecken mit einem Durchmesser von 8 bis 16 cm.

Die bevorzugte Auswalzdicke der zu backenden Teigstücke beträgt 0,8 bis 1,0 mm. Innerhalb dieses Bereiches lassen sich besonders gute Eigenschaften wie Härte, Kaugefühl und Festigkeit des zu backenden Brotes erzielen. Bei Verwendung größerer Auswalzdicken werden Brote mit einer höheren Härte erhalten, die dadurch eine höhere Bißfestigkeit aufweisen, während bei dünneren Auswalzdicken leichter brechende Brote erhalten werden. Diese Ausführungsformen können jedoch je nach Verwendungszweck durchaus erwünscht sein.

Das Ausbacken der Brote erfolgt bei einer Temperatur von 130 bis 250 °C für eine Zeit von 25 bis 3 Minuten. Dabei werden bei höheren Temperaturen geringere Zeiträume benötigt, und bei geringeren Temperaturen ist die Backzeit entsprechend länger. Ferner variiert die Backzeit auch in Abhängigkeit von der Auswalzdicke des Teiges und dessen Wassergehalt. Für eine individuelle Teigmischung mit einer bestimmten Auswalzdicke lassen sich leicht die geeigneten Backbedingungen ermitteln. Da einerseits zunächst das im Teig enthaltene Wasser verdampft wird und andererseits anschließend durch Karamellisierungsreaktionen zunächst eine Bräunung und später Schwärzung des Teiges eintritt, kann das Ende des Backvorganges leicht am Einsetzen einer ersten Bräunung erkannt werden.

Vorzugsweise wird der Backvorgang bei einer Temperatur von 150 bis 200 °C und für eine Zeit von 14 bis 4 Minuten durchgeführt. Diese Angaben gelten für einen Teig mit einer Dicke von ca. 0,8 bis 1,0 mm. Bei größeren oder kleineren Dicken können die Backbedingungen etwas variieren. Besonders bevorzugt ist eine Backtemperatur von 170 bis 190 °C für ca. 8 bis 6 Minuten.

Aufgrund der Tatsache, daß nach dem erfindungsgemäßen Verfahren kein Treibmittel verwendet wird (beispielsweise Hefe, Na₂CO₃, NaHCO₃, andere Karbonate, oder Sauerteigzubereiten) geht der Teig während des Backvorganges nicht auf, sonder behält weitestgehend seine ursprüngliche Dicke. Bedingt durch das Verdampfen der im Teig befindlichen Flüssigkeit kann es an einzelnen Stellen zu blasigen Aufwürfen des Teiges führen, wodurch das fertige Backprodukt stellenweise eine größere Dicke aufweist. Dennoch ist das erhaltene Brot auf dem überwiegenden Teil seiner Fläche nicht oder kaum dicker als der ursprüngliche Teig.

Zur Vermeidung von größeren Aufblähungen des Teiges während des Backvorganges kann der Teig vor dem Backen mit einem spitzen Gegenstand, beispielsweise einer Gabel, an mehreren Stellen auf seiner Oberfläche zusammengedrückt werden.

Zusätzlich zu dem oben beschriebenen Mehl und Wasser kann der Teig Speisesalz enthalten, vorzugsweise in einer Menge von 1 bis 3 Gew.%, bezogen auf das Gewicht des gemahlenen Getreides, besonders bevorzugt ca. 2 Gew.%.

Außerdem können dem Teig weitere Gewürze zugegeben werden, vorzugsweise in einer Menge von 1 bis 3 Gew.%, bezogen auf das Gewicht des gemahlenen Getreides. Beispiele für erfindungsgemäß verwendbare Gewürze sind Kümmel, Kreuzkümmel, Fenchel, Anis, Sesam, Mohn, Paprika, Pfeffer oder getrocknete Kräuter.

Das nach dem Backen erhaltene Brot zeichnet sich dadurch aus, daß es sehr hart ist, aber aufgrund seiner geringen Dicke angenehme Beiß- und Kaueigenschaften besitzt. Darüber hinaus wird während des Backens das bei der Teigherstellung zugegebene Wasser praktisch vollständig entfernt, wodurch die angestrebte Lagerbeständigkeit erzielt wird.

Das erfindungsgemäße Verfahren zur Herstellung eines lagerbeständigen treibmittelfreien Brotes ermöglicht die einfache und kostengünstige Herstellung eines Brotes, das lange haltbar ist, ein angenehmes Beiß- und Kaugefühl besitzt und einen gesunden und bekömmlichen Beitrag zur täglichen Ernährung liefern kann. Darüber hinaus besitzt das nach dem Verfahren erhaltene Brot einen je nach Ausführungsform mehr oder weniger kräftigen Getreidegeschmack, der den Eigengeschmack eines dazu genossenen Belages in vorteilhafterweise unterstreicht, ohne diesen zu übertönen.

Nachfolgend ist exemplarisch ein Ausführungsbeispiel beschrieben:

### Beispiel

1 kg Vollkornmischmehl aus 400 g Dinkel, 400 g Weizen, 100 g Roggen und 100 g Karmut werden mit 520 g Wasser und 20 g Speisesalz zu einem Teig verknetet und auf eine Dicke von 3,7 mm ausgerollt. Anschließend werden elliptische Teigstücke ausgestochen, die anschließend auf eine Dicke von 0,9 mm ausgewalzt werden, wobei kreisförmige Teigflecken mit einem Durchmesser von 12 cm erhalten werden. Diese Teigflecken werden mit einer Gabel an verschiedenen Stellen über die Oberfläche verteilt eingestochen.

Anschließend werden die Teigstücke bei einer Temperatur von ca. 180 °C für etwa 7 Minuten gebacken.

## Patentansprüche

1. Verfahren zur Herstellung eines lagerfähigen, treibmittelfreien Brotes, das die folgenden Schritte umfaßt:
a) Vermischen von 100 Gew.-% gemahlenem Getreide mit 45 bis 60 Gew.-% Wasser,
b) Auswalzen des erhaltenen Teiges auf eine Dicke von 0,6 bis 1,2 mm, und
c) Backen für 25 bis 3 Minuten bei einer Temperatur von 130 bis 250°C, bis das zur Teigbildung verwendete Wasser im wesentlichen vollständig entfernt ist.

2. Verfahren gemäß Anspruch 1, worin der Teig in Schritt b) auf eine Dicke von 0,8 bis 1,0 mm ausgewalzt wird.

3. Verfahren gemäß Anspruch 1 oder 2, worin der Teig auf beliebig geformte Stücke mit einer Fläche von 50 bis 200 cm² zurechtgeschnitten wird.

4. Verfahren gemäß einem oder mehreren der vorangehenden Ansprüche, worin der Backvorgang für 14 bis 4 Minuten bei einer Temperatur von 150 bis 200°C durchgeführt wird.

5. Verfahren gemäß einem oder mehreren der vorangehenden Ansprüche, worin das gemahlene Getreide eine Mischung aus zwei oder mehr verschiedenen Getreidesorten ist.

6. Verfahren gemäß einem oder mehreren der vorangehenden Ansprüche, worin eine oder mehrere Komponenten des gemahlenen Getreides Vollkorngetreide ist/sind.

7. Verfahren gemäß mindestens einem der Ansprüche 5 und 6, worin das gemahlene Getreide eine Mischung aus Weizen, Dinkel und Roggen umfaßt.

8. Verfahren gemäß einem oder mehreren der vorangehenden Ansprüche, worin dem Teig weiterhin Gewürze in einer Menge von 1 bis 3 Gew.-%, bezogen auf das Gewicht des gemahlenen Getreides, zugegeben werden.

9. Verfahren gemäß Anspruch 8, worin als Gewürze Kümmel, Kreuzkümmel, Fenchel, Anis, Sesam, Mohn, Paprika, Pfeffer oder getrocknete Kräuter verwendet werden.

10. Brot, erhältlich nach einem Verfahren gemäß mindestens einem der Ansprüche 1 bis 9.
